# EUROPEAN PATENT APPLICATION

(11) **EP 4 169 884 A1**
(43) Date of publication of application: **26.04.2023**
(21) Application number: 21826495.0
(22) Date of filing: 28.05.2021
(51) Int. Cl.: C03C 13/02, C03C 13/00, C04B 14/42, C04B 28/02, C08K 3/40

(54) **COMPOSITION FOR GLASS FIBER**

(30) Priority: 18.06.2020 JP 2020105254; 03.02.2021 JP 2021015472
(71) Applicant: Nippon Electric Glass Co., Ltd., Otsu-shi, Shiga 520-8639 (JP)
(72) Inventor: SEGAWA, Kyohei, Otsu-shi Shiga 520-8639 (JP); KIMURA, Miki, Otsu-shi Shiga 520-8639 (JP); YOKOTA, Yuki, Otsu-shi Shiga 520-8639 (JP)
(74) Representative: Tetzner, Michael
(86) International application number: PCT/JP2021/020348
(87) International publication number: WO 2021/256217

(57) **Abstract**

Provided is a composition for a glass fiber having a high elastic modulus and satisfactory productivity. The composition for a glass fiber includes, in terms of mass%, 0% to 1% of Li₂O+Na₂O+K₂O, and has SiO₂/Al₂O₃ of from 1 to 4 and MgO/CaO of from 0.2 to 3.9 in terms of mass ratio.

## Description

### Technical Field

The present invention relates to a composition for a glass fiber.

### Background Art

A glass fiber (also referred to as "glass filament") has been produced by continuously forming (spinning) molten glass into a fiber shape with a forming apparatus called a bushing apparatus (also referred to as "platinum heating vessel") generally having a substantially rectangular appearance. The bushing apparatus is arranged in a bottom portion of a pot-shaped vessel having a function of temporarily retaining the molten glass. In addition, the bushing apparatus is formed of a heat-resistant metal material such as platinum, and includes many nozzle portions (or orifice portions) in a bottom portion thereof. Temperature control is performed with the bushing apparatus so that the temperature of the molten glass may be an optimum temperature at the tip of each of the bushing nozzles, specifically, the temperature at which its viscosity at high temperature corresponds to 10³ dPa·s. Then, the molten glass is continuously drawn out of the bushing nozzle and quenched to be formed (spun) as the glass fiber.

In the case where the forming of the glass fiber is performed, when the liquidus temperature Ty of the molten glass becomes equal to or more than the forming temperature Tx of the glass (the temperature at which the viscosity at high temperature of the glass corresponds to 10³ dPa·s), a crystal serving as a cause for devitrification is liable to deposit in the molten glass in a vicinity portion of the bushing nozzle. As a result, the bushing nozzle clogs to be responsible for yarn breakage also referred to as "break". Accordingly, the liquidus temperature Ty of the molten glass needs to be lower than the forming temperature Tx (i.e., a temperature difference ΔTxy=Tx-Ty>0), and the temperature difference ΔTxy is preferably as large as possible. In the case where the forming temperature Tx is increased, the temperature difference (ΔTxy) between the forming temperature and the liquidus temperature Ty of the molten glass increases. In this case, however, the following problem occurs. An increase in production cost for the glass fiber along with an increase in energy needed for the melting of the glass is caused, or the lifetime of an incidental facility such as the bushing apparatus is shortened. Accordingly, the forming temperature Tx is preferably reduced.

As described above, in the production of the glass fiber, the control of the forming temperature Tx and the temperature difference ΔTxy is extremely important. Meanwhile, however, the high functionalization of a glass-fiber-containing composite material has been required, and hence there has been a growing demand for a glass fiber that is more excellent in elastic modulus. An S-glass formed of a glass composition including SiO₂, Al₂O₃, and MgO, or an R-glass formed of a glass composition including SiO₂, Al₂O₃, MgO, and CaO has been known as a glass for a glass fiber having such characteristic. However, any such glass has involved a problem in terms of productivity because its forming temperature Tx is high and its liquidus temperature Ty is also high, and hence its temperature difference ΔTxy is small.

In view of the foregoing, in Patent Literature 1, there is a disclosure of a composition for a glass fiber intended to improve a fiber formation temperature (i.e., forming temperature Tx) and a ΔT (i.e., temperature difference ΔTxy).

### Citation List

Patent Literature 1: JP 2009-514773 A

### Summary of Invention

### Technical Problem

However, in Patent Literature 1, there is no disclosure of a composition for a glass fiber having a low fiber formation temperature (i.e., forming temperature Tx) and a large ΔT (temperature difference ΔTxy). Further, it cannot be necessarily said that the elastic modulus of a glass fiber obtained in Patent Literature 1 is sufficiently high.

An object of the present invention is to provide a composition for a glass fiber having a high elastic modulus and satisfactory productivity.

### Solution to Problem

According to one embodiment of the present invention, there is provided a composition for a glass fiber, comprising, in terms of mass%, 0% to 1% of Li₂O+Na₂O+K₂O, and having SiO₂/Al₂O₃ of from 1 to 4 and MgO/CaO of from 0.2 to 3.9 in terms of mass ratio. With this configuration, a composition for a glass fiber having a high elastic modulus and satisfactory productivity can be obtained. Herein, the "Li₂O+Na₂O+K₂O" is a total content of Li₂O, Na₂O, and K₂O, the "SiO₂/Al₂O₃" is a value obtained by dividing the content of SiO₂ by the content of Al₂O₃, and the "MgO/CaO" is a value obtained by dividing the content of MgO by the content of CaO.

It is preferred that the composition for a glass fiber according to the embodiment of the present invention further comprise, in terms of mass%, 0.01% to less than 3% of TiO₂.

It is preferred that the composition for a glass fiber according to the embodiment of the present invention further comprise, in terms of mass%, 25% to 70% of SiO₂, 15% to 25% of Al₂O₃, 0.6% to 15% of MgO, 3% to 15% of CaO, and 0% to less than 3% of B₂O₃.

According to one embodiment of the present invention, there is provided a composition for a glass fiber, comprising, in terms of mass%, 50% to 70% of SiO₂, 15% to 25% of Al₂O₃, 1.2% to 15% of MgO, 3% to 15% of CaO, 0.01% to less than 3% of TiO₂, 0% to less than 3% of B₂O₃, and 0% to 1% of Li₂O+Na₂O+K₂O, and having SiO₂/Al₂O₃ of from 2 to 3.2 and MgO/CaO of from 0.4 to 2.5 in terms of mass ratio.

It is preferred that the composition for a glass fiber according to the embodiment of the present invention have a forming temperature Tx of 1,400°C or less. With this configuration, fiber formation can be performed at low temperature. Accordingly, the lifetime of a fiber-forming facility such as a bushing can be lengthened, and the production cost can be reduced. The forming temperature Tx refers to the temperature at which the viscosity at high temperature of molten glass corresponds to 10³ dPa·s.

It is preferred that the composition for a glass fiber according to the embodiment of the present invention have a temperature difference ΔTxy between a forming temperature Tx and a liquidus temperature Ty of 30°C or more. With this configuration, the productivity can be made satisfactory. The liquidus temperature Ty is a value obtained by: loading glass powder that has passed through a standard 30-mesh sieve (sieve opening: 500 µm) and has remained on a standard 50-mesh sieve (sieve opening: 300 µm) into a platinum boat; then holding the powder in a temperature gradient furnace for 24 hours; and measuring the deposition temperature of a crystal (initial phase). In addition, the temperature difference ΔTxy is a difference between the forming temperature Tx and the liquidus temperature Ty.

It is preferred that the composition for a glass fiber according to the embodiment of the present invention have an elastic modulus E of 80 GPa or more. With this configuration, a glass-fiber-containing composite material that shows small strain with respect to a stress and has high physical strength can be obtained.

According to one embodiment of the present invention, there is provided a glass fiber, comprising, in terms of solid content, 95 mass% or more of glass formed of the composition for a glass fiber according to the above-mentioned embodiment of the present invention. With this configuration, a glass fiber having a high elastic modulus can be obtained. The solid content is calculated by: measuring the mass of the glass fiber under a state in which the glass fiber is dried so that a moisture content on the surface of the glass fiber may be less than 0.1%; subjecting the glass fiber to superheat treatment to heat and remove organic matter applied to the surface of the glass fiber; and then measuring the mass of the residue.

According to one embodiment of the present invention, there is provided a glass-fiber-containing composite material, comprising: the glass fiber; and an organic medium, concrete, or mortar. With this configuration, the composite material can be used in a wide variety of applications.

### Advantageous Effects of Invention

According to the present invention, the composition for a glass fiber having a high elastic modulus and satisfactory productivity can be provided.

### Description of Embodiments

A composition for a glass fiber of the present invention comprises, in terms of mass%, 0% to 1% of Li₂O+Na₂O+K₂O, and has SiO₂/Al₂O₃ of from 1 to 4 and MgO/CaO of from 0.2 to 3.9 in terms of mass ratio. The reason for limiting the glass composition as described above is described below. In the description regarding the content of each of the following components, unless otherwise stated, "%" means "mass%".

Li₂O, Na₂O, and K₂O have the effect of reducing the viscosity of glass to accelerate bubble removal. However, in the case where the content thereof is excessively large, when such composition for a glass fiber is used for a glass-fiber-containing composite material, it becomes difficult to maintain the strength over time, and hence it is preferred to reduce the content to the extent possible. Accordingly, the content of Li₂O+Na₂O+K₂O is preferably from 0% to 1% or from 0% to 0.8%, particularly preferably from 0% to 0.5%. The contents of Li₂O, Na₂O, and K₂O are each preferably from 0% to 1%, from 0% to 0.9%, from 0% to 0.8%, from 0% to 0.7%, or from 0% to 0.6%, particularly preferably from 0% to 0.5%.

SiO₂ is a main component that forms the skeleton structure of glass. In addition, SiO₂ is a component that improves the mechanical strength of the glass and the acid resistance of the glass. When the content of SiO₂ is excessively small, the mechanical strength is decreased, and an elastic modulus is lowered, with the result that it becomes difficult to obtain sufficient strength. Accordingly, the lower limit of the content of SiO₂ is preferably 25% or more, 30% or more, 40% or more, 45% or more, 50% or more, 50.5% or more, 51% or more, 51.5% or more, 52% or more, 52.5% or more, 53% or more, 53.5% or more, 54% or more, or 54.5% or more, particularly preferably 55% or more. Meanwhile, when the content of SiO₂ is excessively large, the viscosity of molten glass becomes so high that it becomes difficult to bring the molten glass into a homogeneous molten state, and as a result, it may become difficult to adjust the diameter of a glass fiber. In addition, when the viscosity is high, energy needed for melting the glass is increased, and a forming temperature Tx is increased, with the result that the damage of a bushing made of a precious metal becomes severer to increase the frequency at which the bushing is replaced with a new one. Thus, production cost is increased. Accordingly, the upper limit of the content of SiO₂ is preferably 70% or less, 69% or less, 68% or less, 67% or less, 66% or less, 65.5% or less, 65% or less, 64.5% or less, 64% or less, 63.5% or less, 63% or less, 62.5% or less, 62% or less, 61.5% or less, 61% or less, 60.5% or less, 60% or less, 59.5% or less, 59% or less, 58.5% or less, 58% or less, 57.5% or less, 57% or less, less than 57%, 56.5% or less, or less than 56.5%, particularly preferably 56% or less.

Al₂O₃ is a component that improves the chemical durability and mechanical strength of the glass, and is a component that suppresses the deposition of a crystal and the generation of phase separation in the molten glass and improves the elastic modulus of the glass. When the content of Al₂O₃ is excessively small, the mechanical strength is decreased, and the elastic modulus is lowered, with the result that it becomes difficult to obtain sufficient strength. Accordingly, the lower limit of the content of Al₂O₃ is preferably 15% or more, 15.5% or more, 16% or more, 16.5% or more, 17% or more, 17.1% or more, 17.2% or more, 17.3% or more, 17.4% or more, 17.5% or more, 17.6% or more, 17.7% or more, 17.8% or more, or 17.9% or more, particularly preferably 18% or more. Meanwhile, when the content of Al₂O₃ is excessively large, a devitrified crystal of mullite (3Al₂O₃·2SiO₂) containing Al₂O₃ as a main component is liable to be produced in the molten glass. Further, the viscosity of the molten glass becomes so high that it becomes difficult to bring the molten glass into a homogeneous molten state, and as a result, the dimensional accuracy of the diameter of a glass fiber is liable to be decreased. In addition, the energy needed for melting the glass is increased, and the forming temperature Tx is increased, with the result that the damage of the bushing made of a precious metal becomes severer to increase the frequency at which the bushing is replaced with a new one. Thus, the production cost is increased. Accordingly, the upper limit of the content of Al₂O₃ is preferably 25% or less, particularly preferably less than 25%.

In addition, when SiO₂/Al₂O₃ is excessively small in terms of mass ratio, a devitrified crystal is liable to be produced, and the productivity is decreased. In addition, the forming temperature Tx is increased, and the energy needed for melting the glass is increased, with the result that the damage of the bushing made of a precious metal becomes severer to increase the frequency at which the bushing is replaced with a new one. Thus, the production cost is increased. Meanwhile, when SiO₂/Al₂O₃ is excessively large, the elastic modulus is lowered, and it becomes difficult to obtain sufficient strength. In addition, the viscosity of the molten glass becomes so high that it becomes difficult to bring the molten glass into a homogeneous molten state, and as a result, the dimensional accuracy of the diameter of a glass fiber is decreased. Accordingly, the lower limit of SiO₂/Al₂O₃ is preferably 1 or more, 1.1 or more, 1.2 or more, 1.3 or more, 1.4 or more, 1.5 or more, 1.6 or more, 1.7 or more, 1.8 or more, 1.9 or more, 2 or more, 2.1 or more, 2.2 or more, 2.3 or more, or 2.4 or more, particularly preferably 2.5 or more, and the upper limit of SiO₂/Al₂O₃ is preferably 4 or less, 3.9 or less, 3.8 or less, 3.7 or less, 3.6 or less, 3.5 or less, 3.4 or less, or 3.3 or less, particularly preferably 3.2 or less.

MgO is a component that has a function as a melting accelerate component that facilitates the melting of a glass raw material, and has a function of reducing the viscosity at the time of the melting of the glass to accelerate bubble removal, thereby reducing the forming temperature Tx. In addition, MgO is a component that improves the mechanical strength of the glass to improve the elastic modulus and the specific elastic modulus. When the content of MgO is excessively small, the viscosity of the molten glass becomes so high that it becomes difficult to bring the molten glass into a homogeneous molten state, and as a result, the dimensional accuracy of the diameter of a glass fiber is liable to be decreased. In addition, the forming temperature Tx is increased, and the energy needed for melting the glass is increased, with the result that the damage of the bushing made of a precious metal becomes severer to increase the frequency at which the bushing is replaced with a new one. Thus, the production cost is increased. Further, the mechanical strength is decreased, and the elastic modulus and the specific elastic modulus are lowered, with the result that it becomes difficult to obtain sufficient strength. Accordingly, the lower limit of the content of MgO is preferably 0.6% or more, 1% or more, 1.2% or more, 1.5% or more, 2% or more, 2.5% or more, 3% or more, 3.5% or more, 4% or more, 4.5% or more, 5% or more, 5.5% or more, 6% or more, or 6.5% or more, particularly preferably 7% or more. Meanwhile, when the content of MgO is excessively large, in glass composition having a large Al₂O₃ content, a devitrified crystal of cordierite (2MgO·2Al₂O₃·5SiO₂) is liable to be produced in the molten glass, and is responsible for the clogging of a nozzle of the bushing at the time of the forming of the glass fiber in some cases. Accordingly, the upper limit of the content of MgO is preferably 15% or less, 14.5% or less, 14% or less, 13.5% or less, 13% or less, 12.5% or less, 12.4% or less, 12.3% or less, 12.2% or less, or 12.1% or less, particularly preferably 12% or less.

As in the MgO component, CaO is a component that has a function as a melting accelerate component that facilitates the melting of the glass raw material, and is a component that reduces the viscosity at the time of the melting of the glass to accelerate the bubble removal, thereby reducing the forming temperature Tx at the time of the forming of the glass fiber. When the content of CaO is excessively small, the viscosity of the molten glass becomes so high that it becomes difficult to bring the molten glass into a homogeneous molten state, and as a result, the dimensional accuracy of the diameter of a glass fiber is liable to be decreased. In addition, the forming temperature Tx is increased, and the energy needed for melting the glass is increased, with the result that the damage of the bushing made of a precious metal becomes severer to increase the frequency at which the bushing is replaced with a new one. Thus, the production cost is increased. Accordingly, the lower limit of the content of CaO is preferably 3% or more, 3.5% or more, 4% or more, 4.5% or more, 5% or more, 5.5% or more, 6% or more, 6.5% or more, 7% or more, 7.1% or more, 7.2% or more, 7.3% or more, or 7.4% or more, particularly preferably 7.5% or more. Meanwhile, when the content of CaO is excessively large, a devitrified crystal of wollastonite (CaO·SiO₂) is liable to be produced in the molten glass, and is responsible for the clogging of a nozzle of the bushing at the time of the forming of the glass fiber in some cases. Further, the mechanical strength is decreased, and the elastic modulus and the specific elastic modulus are lowered, with the result that it becomes difficult to obtain sufficient strength. Accordingly, the upper limit of the content of CaO is preferably 15% or less, 14.5% or less, 14% or less, 13.5% or less, 13% or less, 12.9% or less, 12.8% or less, 12.7% or less, 12.6% or less, 12.5% or less, 12.4% or less, 12.3% or less, 12.2% or less, or 12.1% or less, particularly preferably 12% or less.

In addition, MgO/CaO is preferably from 0.2 to 3.9, from 0.3 to 3.5, from 0.35 to 3, from 0.35 to 2.5, from 0.36 to 2.5, from 0.37 to 2.5, from 0.38 to 2.5, from 0.4 to 2.5, from 0.4 to 2.2, from 0.4 to 2, from 0.4 to 1.8, or from 0.4 to 1.7, particularly preferably from 0.4 to 1.65 in terms of mass ratio. When MgO/CaO is excessively small, a devitrified crystal of wollastonite (CaO·SiO₂) is liable to be produced in the molten glass, and is responsible for the clogging of a nozzle of the bushing at the time of the forming of the glass fiber in some cases. In addition, the forming temperature Tx is increased, and the energy needed for melting the glass is increased, with the result that the damage of the bushing made of a precious metal becomes severer to increase the frequency at which the bushing is replaced with a new one. Thus, the production cost is increased. Meanwhile, when MgO/CaO is excessively large, in glass composition having a large Al₂O₃ content, a devitrified crystal of cordierite (2MgO·2Al₂O₃·5SiO₂) is liable to be produced in the molten glass, and is responsible for the clogging of a nozzle of the bushing at the time of the forming of the glass fiber in some cases. In addition, the forming temperature Tx is increased, and the energy needed for melting the glass is increased, with the result that the damage of the bushing made of a precious metal becomes severer to increase the frequency at which the bushing is replaced with a new one. Thus, the production cost is increased.

The composition for a glass fiber of the present invention may comprise the following components in the glass composition in addition to the above-mentioned components.

SrO and BaO are each a component that reduces the viscosity at high temperature. The content of SrO is preferably from 0% to 2%, from 0% to 1.9%, from 0% to 1.8%, from 0% to 1.7%, from 0% to 1.6%, from 0% to 1.5%, from 0% to 1.4%, from 0% to 1.3%, from 0% to 1.2%, from 0% to 1.1%, from 0% to 1%, from 0% to 0.9%, from 0% to 0.8%, from 0% to 0.7%, from 0% to 0.6%, from 0% to 0.5%, from 0.001% to 0.5%, from 0.002% to 0.5%, from 0.003% to 0.5%, from 0.004% to 0.5%, from 0.005% to 0.5%, from 0.006% to 0.5%, from 0.007% to 0.5%, from 0.008% to 0.5%, from 0.009% to 0.5%, or from 0.01% to 0.5%, particularly preferably from 0.05% to 0.5%, and the content of BaO is preferably from 0% to 2%, from 0% to 1.9%, from 0% to 1.8%, from 0% to 1.7%, 0% to 1.6%, from 0% to 1.5%, from 0% to 1.4%, from 0% to 1.3%, from 0% to 1.2%, from 0% to 1.1%, from 0% to 1.0%, from 0% to 0.9%, from 0% to 0.8%, from 0% to 0.7%, from 0% to 0.6%, from 0% to 0.5%, from 0.001% to 0.5%, from 0.002% to 0.5%, from 0.003% to 0.5%, from 0.004% to 0.5%, from 0.005% to 0.5%, from 0.006% to 0.5%, from 0.007% to 0.5%, from 0.008% to 0.5%, from 0.009% to 0.5%, or from 0.01% to 0.5%, particularly preferably from 0.05% to 0.5%. When the content of SrO and/or BaO is excessively large, the phase separation property of the molten glass is liable to be increased.

MgO+CaO+SrO+BaO is preferably from 8% to 40%, from 10% to 38%, or from 12% to 35%, particularly preferably from 15% to 30%. When MgO+CaO+SrO+BaO is excessively small, the viscosity of the molten glass becomes so high that it becomes difficult to bring the molten glass into a homogeneous molten state, and as a result, the dimensional accuracy of the diameter of a glass fiber is liable to be decreased. In addition, the forming temperature Tx is increased, and the energy needed for melting the glass is increased, with the result that the damage of the bushing made of a precious metal becomes severer to increase the frequency at which the bushing is replaced with a new one. Thus, the production cost is increased. Further, the mechanical strength is decreased, and the elastic modulus is lowered, with the result that it becomes difficult to obtain sufficient strength. Meanwhile, when MgO+CaO+SrO+BaO is excessively large, devitrified crystals such as cordierite (2MgO·2Al₂O₃·5SiO₂) and wollastonite (CaO·SiO₂) are liable to be produced in the molten glass, and are responsible for the clogging of a nozzle of the bushing at the time of the forming of the glass fiber in some cases. Herein, the "MgO+CaO+SrO+BaO" is a total content of MgO, CaO, SrO, and BaO.

TiO₂ is a component that improves the elastic modulus of the glass, and has a function of reducing the deposition temperature of the devitrified crystal of mullite (3Al₂O₃·2SiO₂) or cordierite (2MgO-2Al₂O₃·5SiO₂) in a SiO₂·Al₂O₃·MgO composition system. Further, the melting temperature of the glass, the viscosity of the glass, and the forming temperature Tx can be reduced, and hence the elastic modulus of the glass to be obtained can be maintained while satisfactory productivity is maintained. When the content of TiO₂ is excessively small, it becomes difficult to obtain the above-mentioned effects. Accordingly, the lower limit of the content of TiO₂ is preferably 0.01% or more, 0.02% or more, 0.03% or more, 0.04% or more, 0.05% or more, 0.06% or more, 0.07% or more, 0.08% or more, 0.09% or more, 0.1% or more, 0.15% or more, 0.2% or more, 0.25% or more, 0.3% or more, 0.35% or more, 0.4% or more, 0.45% or more, 0.5% or more, 0.55% or more, 0.6% or more, 0.65% or more, 0.7% or more, 0.75% or more, 0.8% or more, 0.85% or more, 0.9% or more, 0.95% or more, 1% or more, 1.05% or more, 1.10% or more, 1.15% or more, 1.2% or more, 1.25% or more, 1.3% or more, 1.35% or more, 1.4% or more, 1.45% or more, or 1.5% or more, particularly preferably more than 1.5%. It is preferred that the content of SiO₂ be set to be relatively low (e.g., less than 57%) and the content of TiO₂ be set to be relatively high (e.g., 1.0% or more) because both the low liquidus temperature and the high Young's modulus can be easily achieved. Meanwhile, when the content of TiO₂ is excessively large, a devitrified crystal of a TiO₂ system is liable to be produced in the molten glass, and is responsible for the clogging of a nozzle of the bushing at the time of the forming of the glass fiber in some cases. Accordingly, the upper limit of the content of TiO₂ is preferably less than 3%, less than 2.9%, less than 2.8%, less than 2.7%, less than 2.6%, less than 2.5%, less than 2.4%, less than 2.3%, less than 2.2%, less than 2.1%, less than 2%, less than 1.9%, less than 1.8%, or 1.7% or less, particularly preferably less than 1.7% or 1% or less.

ZrO₂ is a component that improves the elastic modulus of the glass as in the TiO₂ component. When the content of ZrO₂ is excessively small, it becomes difficult to obtain the above-mentioned effects. Accordingly, the lower limit of the content of ZrO₂ is preferably 0% or more, 0.001% or more, 0.002% or more, 0.003% or more, or 0.004% or more, particularly preferably 0.005% or more. Meanwhile, when the content of ZrO₂ is excessively large, ZrO₂ may increase the deposition temperature of the devitrified crystal of mullite (3Al₂O₃·2SiO₂) or cordierite (2MgO·2Al₂O₃·5SiO₂) in the glass melt of a SiO₂-Al₂O₃-MgO composition system. Accordingly, the upper limit of the content of ZrO₂ is preferably 2% or less, 1.9% or less, 1.8% or less, or 1.7% or less, particularly preferably 1.65% or less.

Fe₂O₃ is a component that improves the elastic modulus of the glass as in the ZrO₂ and TiO₂ components. However, when the content of Fe₂O₃ is excessively large, a devitrified crystal of a Fe₂O₃ system is liable to be produced in the molten glass, and is responsible for the clogging of a nozzle of the bushing at the time of the forming of the glass fiber in some cases. Accordingly, the content of Fe₂O₃ is preferably from 0% to 3%, from 0% to 2.9%, from 0% to 2.8%, from 0% to 2.7%, from 0% to 2.6%, from 0% to 2.5%, from 0% to 2.4%, from 0% to 2.3%, from 0% to 2.2%, from 0% to 2.1%, or from 0% to 2%, particularly preferably from 0.01% to 2%.

B₂O₃ is a component that forms a skeleton in a glass network structure as in SiO₂, and is a component that has functions of: reducing the viscosity of the glass to accelerate the bubble removal; reducing the melting temperature and forming temperature Tx of the glass; and improving the meltability of the glass. The content of B₂O₃ is preferably from 0% to less than 3%, from 0% to 2.9%, from 0% to 2.8%, from 0% to 2.7%, from 0% to 2.6%, from 0% to 2.5%, from 0% to 2.4%, from 0% to 2.3%, from 0% to 2.2%, from 0% to 2.1%, from 0% to 2%, from 0% to 1.9%, from 0% to 1.8%, from 0% to 1.7%, from 0% to 1.6%, from 0% to 1.5%, from 0% to 1.4%, from 0% to 1.3%, from 0% to 1.2%, from 0% to 1.1%, from 0% to less than 1%, from 0% to 0.9%, from 0% to 0.8%, or from 0% to 0.75%, particularly preferably from 0% to 0.7%. When the content of B₂O₃ is excessively large, the elastic modulus may be lowered or the evaporation amount of a boron component may be increased during melting, which not only corrodes the facility but also pollutes the surrounding environment.

P₂O₅ is a component that suppresses the deposition of a devitrified crystal and reduces the liquidus temperature Ty. The content of P₂O₅ is preferably from 0% to less than 2.0%, from 0% to 1.5%, from 0% to 1%, or from 0% to 0.7%, particularly preferably from 0% to 0.4%. When the content of P₂O₅ is excessively large, the mechanical strength is decreased, and the elastic modulus is lowered, with the result that it becomes difficult to obtain sufficient strength.

Y₂O₃ is a component that improves the elastic modulus of the glass. However, when the content of Y₂O₃ is excessively large, the density is increased. Accordingly, the content of Y₂O₃ is preferably 2% or less, 1.5% or less, 1% or less, less than 1%, 0.5% or less, less than 0.5%, or 0.1% or less, particularly preferably less than 0.1%.

In addition, an arbitrary one kind, or arbitrary two or more kinds selected from SnO₂, As₂O₃, Sb₂O₃, F₂, CeO₂, SO₃, and Cl₂ may be incorporated into the glass for the purpose of improving its fining property. The content of each of the components is preferably from 0% to 2% or from 0% to 1%, particularly preferably from 0.01% to 0.8%.

In order to improve the meltability, the elastic modulus, the alkali resistance, the acid resistance, the water resistance, the forming temperature, and the liquidus temperature, a component except the above-mentioned components, such as ZnO, Cr₂O₃, MnO, La₂O₃, WO₃, or Nb₂O₅, may be incorporated in an appropriate amount as required, and each of the components may be incorporated at up to 2% into the glass.

Further, each of, for example, H₂, O₂, CO₂, CO, H₂O, He, Ne, Ar, and N₂ may be incorporated at up to 0.5% into the glass. In addition, a precious metal element, such as Pt, Rh, or Au, may be incorporated at up to 500 ppm into the glass.

The characteristics of the composition for a glass fiber of the present invention, and a glass fiber and a glass-fiber-containing composite material of the present invention are described below.

The composition for a glass fiber of the present invention has a forming temperature Tx of preferably 1,400°C or less or 1,380°C or less, particularly preferably 1,365°C or less. When the forming temperature Tx is excessively high, the energy needed for melting the glass is increased, with the result that the damage of the bushing made of a precious metal becomes severer to increase the frequency at which the bushing is replaced with a new one. Thus, the production cost is increased. The lower limit of the forming temperature Tx is not particularly limited, but in actuality, is 1,100°C or more.

The composition for a glass fiber of the present invention has a liquidus temperature Ty of preferably 1,300°C or less or 1,280°C or less, particularly preferably 1,265°C or less. When the liquidus temperature Ty is excessively high, the temperature difference ΔTxy is liable to be small, and hence the productivity tends to deteriorate. The lower limit of the liquidus temperature Ty is not particularly limited, but in actuality, is 1,000°C or more.

The composition for a glass fiber of the present invention has a temperature difference ΔTxy between the forming temperature Tx and the liquidus temperature Ty of preferably 30°C or more, 40°C or more, 45°C or more, 50°C or more, 55°C or more, 60°C or more, 65°C or more, 70°C or more, 75°C or more, 80°C or more, or 85°C or more, particularly preferably 90°C or more. When the temperature difference ΔTxy is excessively small, devitrified products that cause the clogging of a nozzle of the bushing at the time of the forming of the glass fiber are liable to be produced, and hence the productivity is decreased. The upper limit value of the temperature difference ΔTxy is not particularly limited, but in actuality, is 180°C or less.

The composition for a glass fiber of the present invention has an elastic modulus E of preferably 80 GPa or more or 85 GPa or more, particularly preferably 90 GPa or more. When the elastic modulus E is excessively low, it becomes difficult to achieve the high functionalization of a glass-fiber-containing composite material. The upper limit value of the elastic modulus E is not particularly limited, but in actuality, is 150 GPa or less.

In the composition for a glass fiber of the present invention, the lower limit of a density ρ is preferably 2 g/cm³ or more, 2.1 g/cm³ or more, 2.2 g/cm³ or more, 2.3 g/cm³ or more, 2.4 g/cm³ or more, 2.5 g/cm³ or more, or 2.55 g/cm³ or more, particularly preferably 2.6 g/cm³ or more. When the density ρ is excessively low, the mechanical strength is decreased, and the elastic modulus E is lowered, with the result that it becomes difficult to obtain sufficient strength. Meanwhile, when the density ρ is excessively high, it becomes difficult to achieve the high functionalization of a glass-fiber-containing composite material. Accordingly, the upper limit of the density ρ is preferably 3 g/cm³ or less, 2.9 g/cm³ or less, or 2.8 g/cm³ or less, particularly preferably 2.7 g/cm³ or less.

In the composition for a glass fiber of the present invention, the specific elastic modulus calculated by elastic modulus E/density ρ is preferably 33 or more, 33.5 or more, 34 or more, 34.5 or more, 35 or more, or 35.5 or more, particularly preferably 36 or more. When the specific elastic modulus is excessively low, it becomes difficult to achieve the high functionalization of a glass-fiber-containing composite material. The upper limit value of the specific elastic modulus is not particularly limited, but in actuality, is 45 or less.

The glass fiber of the present invention comprises, in terms of solid content, 95% or more of glass formed of the composition for a glass fiber described above. When 95 mass% or more of the glass fiber of the present invention is the glass formed of the composition for a glass fiber described above, and the balance is organic matter such as a coating agent, a flaw hardly occurs on the surface of the glass fiber in various processing steps such as a step of weaving the glass fiber, and hence stable strength performance can be maintained. In addition, the glass fiber can sufficiently exhibit various kinds of physical and chemical performance. The content of the glass formed of the composition for a glass fiber in the glass fiber of the present invention is preferably from 95 mass% to 100 mass%, from 95.5 mass% to less than 100 mass%, or from 96 mass% to 99.99 mass%, particularly preferably from 96.5 mass% to less than 99.99 mass% in terms of solid content. Herein, the solid content is calculated by: measuring the mass of the glass fiber under a state in which the glass fiber is dried so that a moisture content on the surface of the glass fiber may be less than 0.1 mass%; subjecting the glass fiber to heat treatment at high temperature to heat and remove the organic matter applied to the surface of the glass fiber; and then measuring the mass of the residue.

A case in which the content of the glass formed of the composition for a glass fiber is less than 95 mass% in terms of solid content is not economical because of the following reason: the protective performance of the organic matter applied to the surface on the glass fiber is not particularly improved, and the amount of the organic matter needed for the application increases, and hence production cost for the glass fiber increases. In addition, when the content of the glass formed of the composition for a glass fiber expressed as a mass percent in terms of solid content is more than 99.99 mass%, the protective performance on the surface of the glass fiber is not sufficiently exhibited in some cases.

In addition, the shape of a fiber section of the glass fiber of the present invention vertical to a drawing direction at the time of its spinning may be any one of irregular sectional shapes, such as an ellipse, a track shape, a flat shape, a rectangular shape, a cocoon shape, and a polygon, in addition to a circular shape.

In addition, the product form of the glass fiber of the present invention is preferably any one of a chopped strand, a yarn, and a roving. With this configuration, the glass fiber can be used in various applications.

Herein, the chopped strand is a fiber obtained by cutting a glass fiber bundle into a predetermined length, the yarn is a continuous glass fiber that is twisted, and the roving is obtained by paralleling a plurality of strands each serving as a glass fiber bundle.

The fiber length and fiber diameter of the chopped strand are not limited, and a fiber length and a fiber diameter adapted to its applications may be selected. In addition, any method may be adopted as a method of producing the chopped strand. The glass fiber may be directly turned into a short fiber immediately after a melting step, or may be subjected to cutting with a cutting apparatus in accordance with its applications after having been wound as a long fiber once. In this case, any method may be adopted as a cutting method. For example, a peripheral cutting edge cutting apparatus, an inner diameter cutting edge cutting apparatus, or a hammer mill may be used. In addition, the assembled form of the chopped strand is not particularly limited. That is, the glass fibers cut into appropriate lengths may be laminated on a plane in a non-oriented manner and formed with a specific binder, or may be brought into a state of being accumulated three-dimensionally in a non-oriented manner. A glass master batch (GMB) pellet (also referred to as, for example, "resin columnar body" or "LFTP") into which the glass fiber has been incorporated at a high content is also permitted.

As long as a predetermined twist is imparted to the yarn, the magnitude, direction, and the like of the twist are not particularly limited, and an untwisted yarn is also permitted.

In addition, any appearance may be adopted for the roving without a hitch as long as the roving is obtained by paralleling the plurality of strands each serving as a glass fiber bundle to provide a bundle, and winding the bundle in a cylindrical shape, and the diameters of the wound fibers and the number of the paralleled fibers are not limited.

In addition, the glass fiber of the present invention may be utilized in the form of, for example, a continuous strand mat, a bonded mat, a cloth, a tape, a braid cloth, or a milled fiber in addition to the foregoing. In addition, the glass fiber may be turned into a prepreg impregnated with a resin. In addition, with regard to a usage method, forming method, or the like to which the glass fiber is applied, the glass fiber may correspond to, for example, spray-up, hand lay-up, filament winding, injection molding, centrifugal molding, roller forming, or a BMC or SMC method involving using a match die.

In addition, desired performance may be imparted to the glass fiber of the present invention by applying various surface treatment agents. For example, one kind, or any combination of two or more kinds, of a sizing agent, a bundling agent, a coupling agent, a lubricant, an antistatic agent, an emulsifying agent, an emulsion stabilizer, a pH adjuster, an anti-bubbling agent, a colorant, an antioxidant, an antifungal agent, and a stabilizer may be applied in an appropriate amount to the surface of the glass fiber to cover the surface. In addition, any such surface treatment agent or application agent may be a starch-based agent or may be a plastic-based agent.

An acrylic, an epoxy, urethane, a polyester, vinyl acetate, a vinyl acetate-ethylene copolymer, or the like may be appropriately used as, for example, a sizing agent for a FRP.

The glass-fiber-containing composite material of the present invention comprises the glass fiber described above and an organic medium, concrete, or mortar.

Herein, the organic medium is typified by an organic resin, such as a thermoplastic resin or a thermosetting resin. In addition, the concrete is obtained by mixing cement, sand, gravel, and water, and the mortar is obtained by mixing cement, sand, and water.

With regard to the kind of the organic medium, optimum resins may be appropriately used alone or in combination thereof in accordance with applications, and any such resin may be used in combination with any other structure-reinforcing material, such as a carbon fiber, a ceramic fiber, or a bead material.

Examples of the thermoplastic resin include an acrylic resin, a polyacetal-based resin, a polyamide-based resin, a polyethylene-based resin, a polyethylene terephthalate-based resin, a polycarbonate-based resin, a polystyrene-based resin, a polyphenylene sulfide-based resin, a polybutylene terephthalate-based resin, a polypropylene-based resin, and a polyvinyl chloride-based resin.

Examples of the thermosetting resin include an epoxy-based resin, a thermosetting-type modified polyphenylene ether-based resin, a thermosetting-type polyimide-based resin, a urea-based resin, an allyl resin, a silicon resin, a benzoxazine-based resin, a phenol-based resin, an unsaturated polyester-based resin, a bismaleimide triazine resin, an alkyd-based resin, a furan-based resin, a melamine-based resin, a polyurethane-based resin, and an aniline-based resin.

In addition, the blending ratios of various components forming the concrete or the mortar, and the kind of the cement are not particularly limited. Fly ash or the like may be added.

The glass fiber of the present invention may be used alone. In, for example, a liquid crystal display apparatus to be utilized as the display apparatus of a liquid crystal television or a personal computer, the glass fiber is suitably used in the application of a liquid crystal spacer to be used for holding an interval between two substrate glasses because the fiber diameter of the glass fiber has stable dimensional accuracy.

Further, the composition for a glass fiber and glass fiber of the present invention can each be recycled. That is, an article comprising the composition for a glass fiber and glass fiber of the present invention may be formed into a fiber shape or various shapes except a fiber, such as a spherical shape and a granular shape, through a remelting step to be used in any other application. The article may be used as, for example, a soil additive, a concrete additive or aggregate, or an asphalt additive.

Next, a method of producing the glass fiber of the present invention is described.

First, a blended glass raw material batch is loaded into a glass melting furnace so as to have the above-mentioned composition (and characteristics) and is vitrified, melted, and homogenized. The composition is as described above, and the description thereof is omitted here.

Subsequently, the molten glass is spun to form glass fibers. More specifically, the molten glass is supplied to a bushing. The molten glass supplied to the bushing is continuously drawn out in the form of a filament from a large number of bushing nozzles formed on a bottom surface of the bushing. Various treatment agents are applied to the monofilaments drawn out in this manner, and the monofilaments are bundled in predetermined numbers to obtain glass fibers.

The glass fibers of the present invention thus formed are processed into a chopped strand, a yarn, a roving, and the like and are used for various applications.

### Example 1

The present invention is described below in detail by way of Examples. The following Examples are merely illustrative. The present invention is not limited to the following Examples.

In Tables 1 to 7, there are shown Examples (Samples No. 1 to No. 12 and No. 14 to No. 102) of the present invention and Comparative Example (Sample No. 13).

**Table 1**

| | No. 1 | No. 2 | No. 3 | No. 4 | No. 5 | No. 6 | No. 7 | No. 8 | No. 9 | No. 10 | No. 11 | No. 12 | No. 13 | No. 14 | No. 15 |
|---|---|---|---|---|---|---|---|---|---|---|---|---|---|---|---|
| SiO₂ | 59.2 | 59.3 | 59 | 60 | 59.9 | 59.9 | 59.4 | 57.8 | 59.1 | 59.2 | 59 | 58.9 | 63.5 | 59.7 | 59.5 |
| Al₂O₃ | 19.8 | 19.8 | 19.8 | 19.2 | 19.3 | 19.3 | 19.7 | 21.4 | 19.8 | 19.9 | 19.8 | 19.8 | 20.5 | 20.0 | 19.8 |
| B₂O₃ | | | 0.12 | | | | 0.077 | | | | | 0.6 | 4.5 | | |
| MgO | 10.1 | 9.5 | 9.2 | 10.0 | 9.5 | 9.0 | 8.5 | 8.6 | 10.0 | 10.0 | 10.0 | 10.0 | 8.5 | 13.2 | 11.7 |
| CaO | 10.0 | 10.4 | 10.9 | 9.9 | 10.4 | 10.9 | 11.4 | 9.5 | 9.7 | 9.4 | 9.7 | 9.7 | 0.1 | 6.5 | 8.3 |
| SrO | | | | | | | | | | | | | | 0.004 | 0.006 |
| BaO | | | | | | | | | | | | | | | |
| Li₂O | | | | | | | | 0.014 | | | | | | | |
| Na₂O | 0.047 | 0.067 | 0.065 | 0.027 | 0.037 | 0.075 | 0.067 | 0.071 | 0.28 | 0.3 | 0.06 | 0.068 | 0.100 | 0.052 | 0.054 |
| K₂O | | 0.02 | | | | | | 0.011 | | | 0.57 | 0.051 | | 0.002 | 0.002 |
| TiO₂ | 0.56 | 0.56 | 0.56 | 0.56 | 0.52 | 0.51 | 0.56 | 0.65 | 0.52 | 0.56 | 0.56 | 0.56 | 2.5 | 0.54 | 0.55 |
| ZrO₂ | | | | | 0.002 | 0.002 | 0.002 | 1.6 | 0.014 | 0.006 | | | | | |
| P₂O₅ | | | 0.071 | | 0.008 | | | | 0.28 | 0.28 | 0.016 | 0.007 | | | |
| Fe₂O₃ | 0.02 | 0.02 | 0.02 | 0.02 | 0.02 | 0.02 | 0.02 | 0.02 | 0.02 | 0.02 | 0.02 | 0.03 | | 0.010 | 0.010 |
| SO₃ | 0.003 | 0.003 | 0.004 | 0.003 | 0.003 | 0.003 | 0.004 | 0.004 | 0.006 | 0.004 | 0.004 | 0.004 | | 0.003 | 0.004 |
| CeO₂ | 0.3 | 0.3 | 0.3 | 0.3 | 0.3 | 0.29 | 0.29 | 0.32 | 0.3 | 0.3 | 0.3 | 0.29 | 0.3 | | |
| SiO₂/Al₂O₃ | 2.99 | 2.99 | 2.98 | 3.13 | 3.10 | 3.10 | 3.02 | 2.70 | 2.98 | 2.97 | 2.98 | 2.97 | 3.10 | 2.99 | 3.01 |
| MgO/CaO | 1.01 | 0.92 | 0.84 | 1.00 | 0.92 | 0.83 | 0.74 | 0.90 | 1.03 | 1.06 | 1.02 | 1.03 | 85.00 | 2.02 | 1.41 |
| Li₂O+Na₂O+K₂O | 0.047 | 0.087 | 0.065 | 0.027 | 0.037 | 0.075 | 0.067 | 0.096 | 0.280 | 0.300 | 0.630 | 0.119 | 0.100 | 0.054 | 0.056 |
| MgO+CaO+SrO+BaO | 20.100 | 19.900 | 20.100 | 19.900 | 19.900 | 19.900 | 19.900 | 18.100 | 19.700 | 19.400 | 19.700 | 19.700 | 8.600 | 19.704 | 20.006 |
| Density ρ (g/cm³) | 2.613 | 2.612 | 2.612 | 2.609 | 2.610 | 2.610 | 2.613 | 2.629 | 2.610 | 2.605 | 2.609 | 2.606 | Unmeasured | 2.604 | 2.608 |
| Tx (°C) | 1,334 | 1,333 | 1,338 | 1,334 | 1,335 | 1,335 | 1,335 | 1,341 | 1,330 | 1,340 | 1,333 | 1,325 | 1,430 | 1,323 | 1,321 |
| Ty (°C) | 1,225 | 1,232 | 1,245 | 1,216 | 1,231 | 1,243 | 1,257 | 1,255 | 1,226 | 1,205 | 1,229 | 1,205 | 1,347 | 1,253 | 1,233 |
| ΔTxy (°C) | 109 | 101 | 93 | 118 | 104 | 92 | 78 | 86 | 104 | 135 | 104 | 120 | 83 | 70 | 88 |
| Elastic modulus E (GPa) | 95.2 | 94.5 | 93.4 | 94.1 | 93.2 | 93.0 | 93.2 | 95.0 | 93.6 | 93.8 | 93.2 | 93.7 | 87.0 | 96.3 | 94.9 |
| Specific elastic modulus | 36.4 | 36.2 | 35.7 | 36.1 | 35.7 | 35.6 | 35.7 | 36.1 | 35.9 | 36.0 | 35.7 | 36.0 | Unmeasured | 37.0 | 36.4 |

**Table 2**

| | No. 16 | No. 17 | No. 18 | No. 19 | No. 20 | No. 21 | No. 22 | No. 23 | No. 24 | No. 25 | No. 26 | No. 27 | No. 28 | No. 29 | No. 30 |
|---|---|---|---|---|---|---|---|---|---|---|---|---|---|---|---|
| SiO₂ | 59.2 | 59.0 | 58.6 | 59.6 | 58.5 | 58.4 | 58.3 | 58.3 | 58.4 | 59.7 | 56.3 | 57.7 | 57.1 | 57.4 | 56.6 |
| Al₂O₃ | 19.7 | 19.6 | 19.5 | 19.0 | 20.8 | 20.7 | 20.7 | 20.7 | 19.6 | 19.6 | 20.1 | 20.5 | 22.0 | 22.1 | 20.3 |
| B₂O₃ | | | | | | | | 0.5 | | | 0.8 | 0.4 | | | 0.5 |
| MgO | 10.4 | 9.0 | 7.7 | 10.7 | 11.8 | 11.2 | 10.4 | 10.9 | 10.5 | 10.5 | 11.4 | 10.9 | 10.3 | 11.6 | 12.7 |
| CaO | 10.0 | 11.8 | 13.5 | 10.2 | 8.3 | 9.2 | 10.1 | 9.0 | 10.1 | 10.1 | 9.4 | 8.9 | 10.0 | 8.3 | 8.8 |
| SrO | 0.005 | 0.005 | 0.006 | 0.007 | 0.006 | 0.003 | 0.004 | 0.003 | 0.004 | 0.004 | 0.047 | 0.048 | 0.006 | 0.005 | 0.036 |
| BaO | | | | | | | | | | | 0.018 | 0.015 | | | |
| Li₂O | | | | | | | | | | | | | | | |
| Na₂O | 0.054 | 0.038 | 0.038 | 0.032 | 0.037 | 0.039 | 0.038 | 0.037 | 0.034 | 0.037 | 0.028 | 0.027 | 0.043 | 0.041 | 0.045 |
| K₂O | 0.003 | 0.002 | 0.002 | 0.007 | 0.003 | 0.004 | 0.002 | 0.003 | 0.002 | 0.004 | 0.110 | 0.120 | 0.003 | 0.005 | 0.150 |
| TiO₂ | 0.54 | 0.54 | 0.54 | 0.51 | 0.50 | 0.50 | 0.50 | 0.50 | 1.41 | 0.01 | 1.34 | 0.82 | 0.50 | 0.50 | 0.53 |
| ZrO₂ | | | | | | | | | | | 0.05 | 0.05 | | | 0.05 |
| P₂O₅ | | | | | | | | | | | 0.077 | 0.077 | 0.000 | 0.000 | 0.000 |
| Fe₂O₃ | 0.010 | 0.010 | 0.010 | 0.010 | 0.010 | 0.010 | 0.010 | 0.010 | 0.010 | 0.010 | 0.370 | 0.370 | 0.010 | 0.010 | 0.320 |
| SO₃ | 0.004 | 0.004 | 0.004 | 0.004 | 0.003 | 0.004 | 0.004 | 0.003 | 0.004 | 0.004 | | 0.001 | 0.004 | 0.003 | 0.001 |
| CeO₂ | | | | | | | | | | | | | | | |
| SiO₂/Al₂O₃ | 3.00 | 3.01 | 3.01 | 3.14 | 2.82 | 2.82 | 2.82 | 2.82 | 2.98 | 3.05 | 2.80 | 2.81 | 2.60 | 2.60 | 2.79 |
| MgO/CaO | 1.04 | 0.77 | 0.57 | 1.05 | 1.41 | 1.22 | 1.03 | 1.22 | 1.04 | 1.04 | 1.22 | 1.22 | 1.03 | 1.40 | 1.44 |
| Li₂O+Na₂O+K₂O | 0.057 | 0.040 | 0.040 | 0.039 | 0.040 | 0.043 | 0.040 | 0.040 | 0.036 | 0.041 | 0.138 | 0.147 | 0.046 | 0.046 | 0.195 |
| MgO+CaO+SrO+BaO | 20.405 | 20.805 | 21.206 | 20.907 | 20.106 | 20.403 | 20.504 | 19.903 | 20.604 | 20.604 | 20.865 | 19.863 | 20.306 | 19.905 | 21.536 |
| Density ρ (g/cm³) | 2.615 | 2.620 | 2.625 | 2.615 | 2.615 | 2.618 | 2.620 | 2.608 | 2.625 | 2.609 | 2.635 | 2.619 | 2.624 | 2.621 | 2.640 |
| Tx (°C) | 1,323 | 1,320 | 1,320 | 1,316 | 1,319 | 1,319 | 1,320 | 1,317 | 1,310 | 1,327 | 1,282 | 1,312 | 1,315 | 1,313 | 1,279 |
| Ty (°C) | 1,227 | 1,258 | 1,282 | 1,222 | 1,234 | 1,231 | 1,242 | 1,210 | 1,216 | 1,218 | 1,196 | 1,216 | 1,264 | 1,271 | 1,215 |
| ΔTxy (°C) | 96 | 62 | 38 | 94 | 84 | 88 | 78 | 107 | 93 | 108 | 86 | 96 | 51 | 42 | 64 |
| Elastic modulus E (GPa) | 94.9 | 93.9 | 93.5 | 94.5 | 95.8 | 95.4 | 95.5 | 94.9 | 94.9 | 94.6 | 95.6 | 95.6 | 95.8 | 96.7 | 96.6 |
| Specific elastic modulus | 36.3 | 35.9 | 35.6 | 36.1 | 36.6 | 36.4 | 36.4 | 36.4 | 36.2 | 36.2 | 36.3 | 36.5 | 36.5 | 36.9 | 36.6 |

**Table 3**

| | No. 31 | No. 32 | No. 33 | No. 34 | No. 35 | No. 36 | No. 37 | No. 38 | No. 39 | No. 40 | No. 41 | No. 42 | No. 43 | No. 44 | No. 45 |
|---|---|---|---|---|---|---|---|---|---|---|---|---|---|---|---|
| SiO₂ | 56.5 | 56.3 | 56.2 | 55.6 | 56.5 | 56.4 | 56.3 | 56.5 | 56.5 | 56.2 | 56.4 | 56.4 | 56.3 | 55.7 | 55.6 |
| Al₂O₃ | 20.2 | 20.2 | 19.9 | 19.9 | 20.1 | 20.0 | 19.9 | 19.5 | 19.4 | 19.4 | 19.4 | 19.3 | 19.4 | 22.2 | 22.1 |
| B₂O₃ | 0.6 | 0.5 | 0.5 | 0.6 | 0.5 | 0.5 | 0.5 | | | 0.9 | | 0.9 | 0.5 | 0.5 | 0.5 |
| MgO | 11.8 | 11.2 | 11.7 | 11.9 | 12.2 | 11.5 | 10.9 | 13.2 | 12.4 | 12.5 | 11.7 | 11.8 | 12.2 | 11.8 | 11.2 |
| CaO | 9.8 | 10.7 | 9.8 | 10.0 | 8.5 | 9.5 | 10.3 | 9.3 | 10.2 | 9.4 | 11.0 | 10.1 | 10.0 | 8.5 | 9.3 |
| SrO | 0.040 | 0.040 | 0.047 | 0.047 | 0.047 | 0.047 | 0.050 | 0.046 | 0.048 | 0.046 | 0.046 | 0.046 | 0.050 | 0.040 | 0.040 |
| BaO | | | | | | | | 0.016 | 0.016 | 0.015 | 0.015 | 0.016 | 0.018 | 0.026 | 0.026 |
| Li₂O | | | | | | | | | | | | | | | |
| Na₂O | 0.044 | 0.042 | 0.025 | 0.026 | 0.024 | 0.023 | 0.033 | 0.028 | 0.027 | 0.024 | 0.026 | 0.029 | 0.029 | 0.043 | 0.046 |
| K₂O | 0.160 | 0.130 | 0.110 | 0.110 | 0.110 | 0.110 | 0.110 | 0.110 | 0.120 | 0.110 | 0.110 | 0.110 | 0.110 | 0.140 | 0.140 |
| TiO₂ | 0.53 | 0.54 | 1.35 | 1.47 | 1.56 | 1.50 | 1.46 | 0.83 | 0.83 | 0.82 | 0.82 | 0.82 | 0.83 | 0.54 | 0.54 |
| ZrO₂ | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| P₂O₅ | 0.000 | 0.000 | 0.000 | 0.000 | 0.000 | 0.000 | 0.000 | 0.075 | 0.075 | 0.075 | 0.076 | 0.075 | 0.075 | 0.063 | 0.063 |
| Fe₂O₃ | 0.330 | 0.340 | 0.370 | 0.360 | 0.370 | 0.370 | 0.370 | 0.359 | 0.360 | 0.361 | 0.360 | 0.360 | 0.360 | 0.340 | 0.340 |
| SO₃ | 0.001 | 0.001 | 0.001 | 0.001 | 0.001 | 0.001 | 0.001 | 0.001 | 0.001 | 0.001 | 0.001 | 0.001 | 0.001 | 0.002 | 0.001 |
| CeO₂ | | | | | | | | | | | | | | | |
| SiO₂/Al₂O₃ | 2.80 | 2.79 | 2.82 | 2.79 | 2.82 | 2.82 | 2.82 | 2.90 | 2.91 | 2.89 | 2.91 | 2.92 | 2.90 | 2.51 | 2.51 |
| MgO/CaO | 1.21 | 1.05 | 1.20 | 1.19 | 1.43 | 1.21 | 1.06 | 1.41 | 1.22 | 1.33 | 1.06 | 1.17 | 1.22 | 1.39 | 1.20 |
| Li₂O+Na₂O+K₂O | 0.204 | 0.172 | 0.135 | 0.136 | 0.134 | 0.133 | 0.143 | 0.138 | 0.147 | 0.134 | 0.136 | 0.139 | 0.139 | 0.183 | 0.186 |
| MgO+CaO+SrO+BaO | 21.640 | 21.940 | 21.547 | 21.947 | 20.847 | 21.047 | 21.250 | 22.562 | 22.664 | 22.061 | 22.761 | 21.962 | 22.268 | 20.366 | 20.566 |
| Density ρ (g/cm³) | 2.641 | 2.646 | 2.648 | 2.656 | 2.642 | 2.642 | 2.647 | 2.657 | 2.659 | 2.642 | 2.660 | 2.641 | 2.650 | 2.634 | 2.637 |
| Tx (°C) | 1,280 | 1,279 | 1,275 | 1,266 | 1,279 | 1,281 | 1,281 | 1,271 | 1,272 | 1,266 | 1,272 | 1,271 | 1,271 | 1,293 | 1,293 |
| Ty (°C) | 1,217 | 1,234 | 1,213 | 1,217 | 1,216 | 1,216 | 1,224 | 1,236 | 1,231 | 1,216 | 1,234 | 1,211 | 1,215 | 1,230 | 1,251 |
| ΔTxy (°C) | 63 | 46 | 63 | 49 | 63 | 65 | 58 | 35 | 40 | 50 | 38 | 60 | 56 | 63 | 42 |
| Elastic modulus E (GPa) | 96.1 | 96.2 | 96.1 | 96.6 | 96.5 | 95.6 | 96.0 | 97.5 | 97.0 | 95.5 | 96.4 | 95.6 | 96.5 | 96.6 | 96.4 |
| Specific elastic modulus | 36.4 | 36.3 | 36.3 | 36.4 | 36.5 | 36.2 | 36.3 | 36.7 | 36.5 | 36.1 | 36.3 | 36.2 | 36.4 | 36.7 | 36.6 |

**Table 4**

| | No. 46 | No. 47 | No. 48 | No. 49 | No. 50 | No. 51 | No. 52 | No. 53 | No. 54 | No. 55 | No. 56 | No. 57 | No. 58 | No. 59 | No. 60 |
|---|---|---|---|---|---|---|---|---|---|---|---|---|---|---|---|
| SiO₂ | 59.3 | 59.2 | 58.8 | 58.5 | 57.4 | 57.0 | 56.4 | 58.4 | 58.2 | 56.5 | 56.3 | 56.4 | 56.3 | 56.2 | 56.2 |
| Al₂O₃ | 19.8 | 19.7 | 19.5 | 19.5 | 22.0 | 21.9 | 21.7 | 20.7 | 20.6 | 20.2 | 20.2 | 20.2 | 20.0 | 20.0 | 20.2 |
| B₂O₃ | 2.1 | 2.0 | 2.1 | 2.0 | 2.1 | 2.1 | 2.1 | 1.0 | 1.0 | 1.4 | 1.3 | 1.0 | 1.4 | 1.3 | 1.7 |
| MgO | 11.7 | 10.3 | 9.0 | 7.7 | 11.5 | 10.2 | 7.6 | 11.1 | 10.4 | 11.8 | 11.2 | 11.6 | 11.6 | 10.9 | 11.8 |
| CaO | 6.5 | 8.2 | 10.0 | 11.7 | 6.4 | 8.2 | 11.6 | 8.3 | 9.2 | 9.0 | 9.9 | 9.6 | 8.7 | 9.5 | 8.8 |
| SrO | 0.004 | 0.004 | 0.004 | 0.005 | 0.004 | 0.004 | 0.008 | 0.004 | 0.004 | 0.036 | 0.040 | 0.040 | 0.047 | 0.047 | 0.040 |
| BaO | | | | | | | | | | | | | | 0.018 | 0.022 |
| Li₂O | | | | | | | | | | | | | | | |
| Na₂O | 0.054 | 0.039 | 0.037 | 0.039 | 0.043 | 0.041 | 0.043 | 0.040 | 0.038 | 0.043 | 0.039 | 0.041 | 0.026 | 0.031 | 0.028 |
| K₂O | 0.002 | 0.002 | 0.002 | 0.002 | 0.004 | 0.003 | 0.004 | 0.004 | 0.003 | 0.150 | 0.130 | 0.130 | 0.110 | 0.110 | 0.130 |
| TiO₂ | 0.54 | 0.53 | 0.54 | 0.53 | 0.50 | 0.50 | 0.49 | 0.50 | 0.50 | 0.53 | 0.55 | 0.55 | 1.39 | 1.33 | 0.56 |
| ZrO₂ | | | | | | | | | | | 0.05 | 0.05 | 0.05 | 0.05 | 0.05 |
| P₂O₅ | | | | | | | | | | | | | | 0.077 | 0.065 |
| Fe₂O₃ | 0.000 | 0.010 | 0.010 | 0.010 | 0.010 | 0.010 | 0.010 | 0.010 | 0.010 | 0.330 | 0.340 | 0.340 | 0.361 | 0.371 | 0.340 |
| SO₃ | 0.003 | 0.003 | 0.004 | 0.003 | 0.003 | 0.004 | 0.003 | 0.002 | 0.003 | 0.001 | 0.001 | 0.001 | 0.001 | | 0.001 |
| CeO₂ | | | | | | | | | | | | | | | |
| SiO₂/Al₂O₃ | 2.99 | 3.01 | 3.02 | 3.00 | 2.60 | 2.60 | 2.59 | 2.82 | 2.83 | 2.80 | 2.78 | 2.79 | 2.81 | 2.81 | 2.78 |
| MgO/CaO | 1.80 | 1.25 | 0.90 | 0.66 | 1.79 | 1.25 | 0.66 | 1.34 | 1.13 | 1.32 | 1.14 | 1.21 | 1.34 | 1.15 | 1.34 |
| Li₂O+Na₂O+K₂O | 0.056 | 0.041 | 0.039 | 0.041 | 0.047 | 0.044 | 0.047 | 0.044 | 0.041 | 0.193 | 0.169 | 0.171 | 0.136 | 0.141 | 0.158 |
| MgO+CaO+SrO+BaO | 18.204 | 18.504 | 19.004 | 19.405 | 17.904 | 18.404 | 19.208 | 19.404 | 19.604 | 20.836 | 21.140 | 21.240 | 20.347 | 20.465 | 20.662 |
| Density ρ (g/cm³) | 2.570 | 2.575 | 2.580 | 2.587 | 2.583 | 2.588 | 2.598 | 2.598 | 2.600 | 2.623 | 2.626 | 2.633 | 2.626 | 2.627 | 2.619 |
| Tx (°C) | 1,324 | 1,321 | 1,324 | 1,319 | 1,315 | 1,315 | 1,312 | 1,318 | 1,317 | 1,282 | 1,282 | 1,280 | 1,279 | 1,279 | 1,281 |
| Ty (°C) | 1,234 | 1,207 | 1,191 | 1,225 | 1,261 | 1,238 | 1,263 | 1,215 | 1,207 | 1,199 | 1,199 | 1,212 | 1,199 | 1,196 | 1,199 |
| ΔTxy (°C) | 90 | 114 | 133 | 94 | 55 | 77 | 49 | 103 | 110 | 83 | 83 | 68 | 80 | 82 | 82 |
| Elastic modulus E (GPa) | 92.8 | 92.4 | 91.7 | 91.1 | 94.2 | 93.4 | 92.1 | 94.2 | 93.7 | 95.0 | 95.0 | 95.0 | 95.2 | 94.7 | 95.1 |
| Specific elastic modulus | 36.1 | 35.9 | 35.6 | 35.2 | 36.5 | 36.1 | 35.5 | 36.3 | 36.0 | 36.2 | 36.2 | 36.1 | 36.3 | 36.1 | 36.3 |

**Table 5**

| | No. 61 | No. 62 | No. 63 | No. 64 | No. 65 | No. 66 | No. 67 | No. 68 | No. 69 | No. 70 | No. 71 | No. 72 | No. 73 | No. 74 | No. 75 |
|---|---|---|---|---|---|---|---|---|---|---|---|---|---|---|---|
| SiO₂ | 56.0 | 56.1 | 55.6 | 55.6 | 55.7 | 55.7 | 55.6 | 55.7 | 55.7 | 55.7 | 55.9 | 55.9 | 55.8 | 55.6 | 56.1 |
| Al₂O₃ | 19.9 | 19.3 | 22.2 | 22.1 | 22.2 | 22.1 | 22.1 | 22.1 | 22.0 | 22.0 | 21.3 | 21.3 | 21.2 | 21.2 | 21.2 |
| B₂O₃ | 1.6 | 1.7 | 1.6 | 1.4 | 1.0 | 2.0 | 2.0 | 1.0 | 1.4 | 1.4 | 1.2 | 1.6 | 1.2 | 1.6 | 1.5 |
| MgO | 11.5 | 12.5 | 11.8 | 11.2 | 11.7 | 11.4 | 11.1 | 11.1 | 10.8 | 10.4 | 11.4 | 11.4 | 11.1 | 11.0 | 11.2 |
| CaO | 8.9 | 8.9 | 7.6 | 8.4 | 8.2 | 7.5 | 8.0 | 8.9 | 8.9 | 9.3 | 9.0 | 8.5 | 9.4 | 9.4 | 8.3 |
| SrO | 0.047 | 0.045 | 0.040 | 0.039 | 0.039 | 0.038 | 0.037 | 0.038 | 0.038 | 0.037 | 0.037 | 0.038 | 0.037 | 0.037 | 0.049 |
| BaO | 0.019 | 0.015 | 0.027 | 0.027 | 0.027 | 0.026 | 0.024 | 0.028 | 0.026 | 0.025 | 0.027 | 0.026 | 0.025 | 0.025 | 0.016 |
| Li₂O | | | | | | | | | | | | | | | |
| Na₂O | 0.027 | 0.035 | 0.044 | 0.042 | 0.044 | 0.044 | 0.049 | 0.027 | 0.027 | 0.028 | 0.034 | 0.030 | 0.029 | 0.034 | 0.011 |
| K₂O | 0.110 | 0.110 | 0.140 | 0.140 | 0.140 | 0.130 | 0.120 | 0.120 | 0.130 | 0.130 | 0.130 | 0.130 | 0.130 | 0.130 | 0.120 |
| TiO₂ | 1.44 | 0.87 | 0.54 | 0.54 | 0.54 | 0.54 | 0.54 | 0.54 | 0.54 | 0.54 | 0.54 | 0.54 | 0.54 | 0.53 | 0.91 |
| ZrO₂ | 0.05 | 0.05 | 0.05 | 0.05 | 0.05 | 0.05 | 0.05 | 0.05 | 0.05 | 0.05 | 0.05 | 0.05 | 0.05 | 0.05 | 0.06 |
| P₂O₅ | 0.076 | 0.073 | 0.061 | 0.063 | 0.064 | 0.062 | 0.062 | 0.061 | 0.061 | 0.061 | 0.062 | 0.061 | 0.062 | 0.061 | 0.079 |
| Fe₂O₃ | 0.370 | 0.360 | 0.340 | 0.340 | 0.340 | 0.340 | 0.340 | 0.340 | 0.340 | 0.340 | 0.350 | 0.340 | 0.350 | 0.340 | 0.390 |
| SO₃ | | | 0.001 | 0.001 | 0.002 | 0.001 | 0.001 | | 0.001 | | | | | 0.001 | 0.001 |
| CeO₂ | | | | | | | | | | | | | | | |
| SiO₂/Al₂O₃ | 2.81 | 2.91 | 2.50 | 2.51 | 2.51 | 2.52 | 2.52 | 2.52 | 2.53 | 2.53 | 2.62 | 2.62 | 2.63 | 2.62 | 2.65 |
| MgO/CaO | 1.30 | 1.41 | 1.56 | 1.33 | 1.43 | 1.51 | 1.39 | 1.25 | 1.22 | 1.12 | 1.27 | 1.33 | 1.18 | 1.17 | 1.34 |
| Li₂O+Na₂O+K₂O | 0.137 | 0.145 | 0.184 | 0.182 | 0.184 | 0.174 | 0.169 | 0.147 | 0.157 | 0.158 | 0.164 | 0.160 | 0.159 | 0.164 | 0.131 |
| MgO+CaO+SrO+BaO | 20.466 | 21.460 | 19.467 | 19.666 | 19.966 | 18.964 | 19.161 | 20.066 | 19.764 | 19.762 | 20.464 | 19.964 | 20.562 | 20.462 | 19.565 |
| Density ρ (g/cm³) | 2.625 | 2.629 | 2.614 | 2.617 | 2.625 | 2.606 | 2.607 | 2.629 | 2.621 | 2.622 | 2.630 | 2.619 | 2.631 | 2.625 | 2.618 |
| Tx (°C) | 1,275 | 1,265 | 1,291 | 1,298 | 1,294 | 1,293 | 1,290 | 1,294 | 1,293 | 1,293 | 1,290 | 1,287 | 1,286 | 1,283 | 1,291 |
| Ty (°C) | 1,195 | 1,205 | 1,250 | 1,215 | 1,231 | 1,226 | 1,218 | 1,230 | 1,224 | 1,232 | 1,214 | 1,202 | 1,224 | 1,215 | 1,202 |
| ΔTxy (°C) | 80 | 60 | 41 | 83 | 63 | 67 | 72 | 64 | 69 | 61 | 76 | 85 | 62 | 68 | 89 |
| Elastic modulus E (GPa) | 94.8 | 94.8 | 95.8 | 95.5 | 96.1 | 94.6 | 94.8 | 96.1 | 95.4 | 95.1 | 95.8 | 95.3 | 95.6 | 95.3 | 94.9 |
| Specific elastic modulus | 36.1 | 36.1 | 36.6 | 36.5 | 36.6 | 36.3 | 36.3 | 36.6 | 36.4 | 36.3 | 36.4 | 36.4 | 36.3 | 36.3 | 36.3 |

**Table 6**

| | No. 76 | No. 77 | No. 78 | No. 79 | No. 80 | No. 81 | No. 82 | No. 83 | No. 84 | No. 85 | No. 86 | No. 87 | No. 88 | No. 89 | No. 90 |
|---|---|---|---|---|---|---|---|---|---|---|---|---|---|---|---|
| SiO₂ | 56.4 | 56.1 | 56.4 | 56.3 | 55.9 | 56.3 | 56.2 | 56.0 | 55.8 | 55.5 | 55.8 | 56.3 | 61.9 | 61.3 | 59.8 |
| Al₂O₃ | 21.3 | 21.3 | 21.4 | 21.3 | 21.2 | 21.3 | 21.3 | 21.0 | 21.1 | 21.0 | 21.3 | 20.8 | 17.6 | 17.4 | 18.3 |
| B₂O₃ | 1.4 | 1.5 | 1.5 | 1.4 | 1.4 | 2.5 | 1.5 | 0.3 | 1.5 | 1.5 | 1.4 | 1.4 | | | |
| MgO | 11.0 | 10.8 | 10.5 | 11.0 | 10.9 | 10.1 | 11.0 | 10.4 | 10.6 | 10.5 | 11.1 | 10.9 | 13.3 | 10.5 | 11.2 |
| CaO | 8.3 | 8.6 | 8.5 | 8.2 | 8.2 | 8.2 | 8.3 | 8.4 | 8.6 | 8.5 | 8.3 | 8.5 | 6.6 | 10.2 | 10.2 |
| SrO | 0.050 | 0.050 | 0.050 | 0.050 | 0.050 | 0.050 | 0.050 | 0.050 | 0.049 | 0.049 | 0.004 | 0.004 | 0.003 | 0.005 | 0.005 |
| BaO | 0.016 | 0.017 | 0.017 | 0.016 | 0.016 | 0.016 | 0.016 | 0.016 | 0.020 | 0.020 | 0.008 | 0.007 | 0.000 | 0.000 | 0.000 |
| Li₂O | | | | | | 0.010 | 0.050 | 0.070 | 0.000 | 0.000 | 0.000 | 0.000 | 0.000 | 0.000 | 0.000 |
| Na₂O | 0.010 | 0.012 | 0.013 | 0.010 | 0.010 | 0.012 | 0.012 | 0.012 | 0.019 | 0.017 | 0.018 | 0.015 | 0.039 | 0.039 | 0.031 |
| K₂O | 0.120 | 0.120 | 0.130 | 0.120 | 0.120 | 0.120 | 0.120 | 0.120 | 0.120 | 0.150 | 0.097 | 0.094 | 0.004 | 0.004 | 0.003 |
| TiO₂ | 0.91 | 0.91 | 0.91 | 0.91 | 0.91 | 0.80 | 0.91 | 1.01 | 1.64 | 1.63 | 1.62 | 1.61 | 0.52 | 0.52 | 0.50 |
| ZrO₂ | 0.06 | 0.06 | 0.06 | 0.06 | 0.06 | 0.06 | 0.06 | 0.06 | 0.06 | 0.05 | | | | | |
| P₂O₅ | 0.069 | 0.080 | 0.080 | 0.079 | 0.079 | 0.080 | 0.080 | 0.080 | 0.080 | 0.078 | 0.015 | 0.015 | | | |
| Fe₂O₃ | 0.390 | 0.390 | 0.390 | 0.500 | 1.520 | 0.390 | 0.390 | 2.530 | 0.380 | 1.060 | 0.370 | 0.370 | 0.010 | 0.010 | 0.010 |
| SO₃ | 0.010 | 0.001 | | 0.001 | 0.001 | 0.001 | 0.001 | 0.001 | 0.005 | 0.005 | 0.001 | 0.002 | 0.004 | 0.005 | 0.005 |
| CeO₂ | | | | | | | | | | | | | | | |
| SiO₂/Al₂O₃ | 2.64 | 2.63 | 2.64 | 2.64 | 2.64 | 2.64 | 2.64 | 2.67 | 2.64 | 2.64 | 2.62 | 2.71 | 3.52 | 3.52 | 3.27 |
| MgO/CaO | 1.33 | 1.25 | 1.24 | 1.34 | 1.33 | 1.23 | 1.33 | 1.24 | 1.23 | 1.24 | 1.33 | 1.28 | 2.01 | 1.03 | 1.10 |
| Li₂O+Na₂O+K₂ O | 0.130 | 0.132 | 0.143 | 0.130 | 0.130 | 0.142 | 0.182 | 0.202 | 0.139 | 0.167 | 0.115 | 0.109 | 0.043 | 0.043 | 0.034 |
| MgO+CaO+SrO +BaO | 19.366 | 19.467 | 19.067 | 19.266 | 19.166 | 18.366 | 19.366 | 18.866 | 19.269 | 19.069 | 19.412 | 19.411 | 19.903 | 20.705 | 21.405 |
| Density ρ (g/cm³) | 2.614 | 2.617 | 2.611 | Unmea sured | Unmea sured | Unmea sured | Unmea sured | Unmea sured | 2.621 | 2.629 | 2.621 | 2.619 | 2.588 | 2.602 | 2.618 |
| Tx (°C) | 1,296 | 1,293 | 1,299 | 1,284 | 1,267 | 1,292 | 1,292 | 1,253 | 1,292 | 1,286 | 1,297 | 1,298 | 1,331 | 1,328 | 1,310 |
| Ty (°C) | 1,209 | 1,221 | 1,209 | Unmea sured | Unmea sured | Unmea sured | Unmea sured | Unmea sured | 1,203 | 1,205 | 1,199 | 1,202 | 1,254 | 1,219 | 1,219 |
| ΔTxy (°C) | 87 | 72 | 90 | Unmea sured | Unmea sured | Unmea sured | Unmea sured | Unmea sured | 89 | 81 | 98 | 96 | 77 | 109 | 91 |
| Elastic modulus E (GPa) | 94.8 | 94.7 | 94.4 | 94.9 | 95.5 | 93.1 | 94.4 | 95.8 | 94.8 | 95.0 | 95.2 | 94.6 | 94.8 | 93.2 | 94.5 |
| Specific elastic modulus | 36.3 | 36.2 | 36.2 | Unmea sured | Unmea sured | Unmea sured | Unmea sured | Unmea sured | 36.2 | 36.1 | 36.3 | 36.1 | 36.6 | 35.8 | 36.1 |

**Table 7**

| | No. 91 | No. 92 | No. 93 | No. 94 | No. 95 | No. 96 | No. 97 | No. 98 | No. 99 | No. 100 | No. 101 | No. 102 |
|---|---|---|---|---|---|---|---|---|---|---|---|---|
| SiO₂ | 60.4 | 58.0 | 57.4 | 58.0 | 57.4 | 57.9 | 57.4 | 58.8 | 57.9 | 57.9 | 57.3 | 60.8 |
| Al₂O₃ | 16.8 | 20.7 | 20.7 | 20.7 | 20.7 | 20.7 | 20.7 | 20.7 | 20.6 | 20.6 | 20.7 | 17.1 |
| B₂O₃ | | 0.4 | 0.4 | 0.4 | 0.4 | 0.4 | 0.4 | 0.5 | 0.5 | 0.5 | 0.5 | 1.9 |
| MgO | 12.0 | 10.9 | 10.9 | 10.9 | 10.9 | 10.9 | 10.9 | 10.9 | 10.9 | 10.9 | 10.9 | 7.8 |
| CaO | 10.3 | 9.1 | 9.1 | 9.1 | 9.1 | 9.0 | 9.0 | 9.0 | 9.0 | 9.0 | 9.0 | 11.8 |
| SrO | 0.005 | 0.003 | 0.004 | 0.003 | 0.004 | 0.003 | 0.004 | 0.004 | 0.004 | 0.004 | 0.003 | 0.006 |
| BaO | 0.000 | 0.003 | 0.003 | 0.003 | 0.003 | 0.003 | 0.002 | 0.000 | 0.005 | 0.003 | 0.002 | |
| Li₂O | | | | | | | | | | | | |
| Na₂O | 0.028 | 0.480 | 0.970 | 0.004 | | 0.002 | | | | | | 0.032 |
| K₂O | 0.004 | 0.003 | 0.002 | 0.470 | 0.951 | 0.003 | 0.003 | 0.002 | 0.002 | 0.002 | 0.002 | 0.003 |
| TiO₂ | 0.52 | 0.51 | 0.52 | 0.51 | 0.50 | 0.51 | 0.50 | 0.00 | 1.01 | 0.51 | 0.51 | 0.50 |
| ZrO₂ | | | | | | | | | | 0.53 | 1.07 | |
| P₂O₅ | | 0.001 | 0.014 | 0.001 | 0.001 | 0.001 | 0.015 | 0.014 | 0.015 | 0.015 | 0.016 | |
| Fe₂O₃ | 0.010 | 0.020 | 0.020 | 0.020 | 0.020 | 0.540 | 1.040 | 0.020 | 0.020 | 0.020 | 0.020 | 0.010 |
| SO₃ | 0.006 | 0.002 | 0.002 | 0.002 | 0.002 | 0.001 | 0.001 | 0.001 | 0.001 | 0.002 | 0.002 | 0.003 |
| CeO₂ | | | | | | | | | | | | |
| SiO₂/Al₂O₃ | 3.60 | 2.80 | 2.77 | 2.80 | 2.77 | 2.80 | 2.77 | 2.85 | 2.81 | 2.82 | 2.77 | 3.56 |
| MgO/CaO | 1.17 | 1.20 | 1.20 | 1.20 | 1.20 | 1.20 | 1.20 | 1.20 | 1.20 | 1.21 | 1.20 | 0.66 |
| Li₂O+Na₂O+K₂O | 0.032 | 0.483 | 0.972 | 0.474 | 0.951 | 0.005 | 0.003 | 0.002 | 0.002 | 0.002 | 0.002 | 0.035 |
| MgO+CaO+SrO+BaO | 22.305 | 20.006 | 20.007 | 20.006 | 20.007 | 19.906 | 19.906 | 19.904 | 19.909 | 19.907 | 19.905 | 19.606 |
| Density ρ (g/cm³) | 2.621 | 2.612 | 2.613 | 2.610 | 2.609 | 2.620 | 2.629 | 2.603 | 2.615 | 2.619 | 2.631 | 2.574 |
| Tx (°C) | 1,300 | 1,310 | 1,308 | 1,326 | 1,316 | 1,314 | 1,305 | 1,326 | 1,314 | 1,316 | 1,312 | 1,324 |
| Ty (°C) | 1,239 | 1,230 | 1,238 | 1,220 | 1,210 | 1,224 | 1,217 | 1,236 | 1,216 | 1,219 | 1,214 | 1,180 |
| ΔTxy (°C) | 61 | 80 | 70 | 106 | 106 | 90 | 88 | 90 | 98 | 97 | 98 | 144 |
| Elastic modulus E (GPa) | 94.5 | 94.3 | 93.9 | 93.8 | 93.3 | 94.9 | 95.2 | 95.1 | 94.5 | 95.0 | 95.6 | 89.9 |
| Specific elastic modulus | 36.1 | 36.1 | 35.9 | 35.9 | 35.8 | 36.2 | 36.2 | 36.5 | 36.1 | 36.3 | 36.3 | 34.9 |

Each of the samples was prepared as described below.

First, predetermined amounts of various glass raw materials were weighed and mixed by using any natural raw material and/or any chemically formed raw material so that glass composition shown in the table was obtained. Thus, a glass batch was produced. Next, the glass batch was loaded into a platinum-rhodium crucible, and was heated and melted in an air atmosphere at 1,550°C for 5 hours. In order to obtain homogeneous molten glass, molten glass was stirred with a heat-resistant stirring rod in the midst of the heating and melting.

After that, the molten glass brought into a homogeneous state was poured into a casting mold made of carbon, and was subjected to casting into a predetermined shape, followed by the performance of an annealing operation. Thus, a final glass formed body for measurement was obtained.

The physical properties of the resultant glass were measured by the following procedures.

The forming temperature Tx at which the viscosity of the molten glass corresponded to 10³ dPa·s was calculated by the interpolation of a viscosity curve obtained by measuring the respective viscosities a plurality of times on the basis of a platinum sphere pull up method after the formed glass had been loaded into an alumina crucible and reheated to be brought into a melt state.

In addition, the liquidus temperature Ty was determined as described below. Glass powder that had passed through a standard 30-mesh sieve (300 µm) and had remained on a standard 50-mesh sieve (300 µm) was loaded into a vessel made of platinum under a state in which the powder had an appropriate bulk density, and the powder was loaded into an indirect heating-type temperature gradient furnace whose maximum temperature was set to 1,320°C and left at rest, followed by the performance of heating treatment for 16 hours in an air atmosphere. After that, the platinum container containing the glass sample was taken out, and the glass sample was removed from the platinum container. After the glass sample was allowed to cool to room temperature, the location in which crystals start being deposited was recognized with a polarizing microscope, and the crystal deposition temperature was calculated from the temperature gradient in the indirect heating furnace.

The temperature difference ΔTxy between the forming temperature Tx and the liquidus temperature Ty was calculated by (forming temperature Tx)-(liquidus temperature Ty).

The elastic modulus E was measured for each of both surfaces of a sheet-shaped sample having dimensions measuring 40 mm by 20 mm by 2 mm, which had been polished with a polishing liquid having dispersed therein alumina powder No. 1,200, with a free resonance-type elastic modulus-measuring apparatus (manufactured by Nippon Techno-Plus Co., Ltd.) under a room temperature environment.

The density ρ was measured by a well-known Archimedes method.

The specific elastic modulus was calculated by (elastic modulus E)/(density ρ).

As is apparent from Table 1, in each of Samples No. 1 to No. 12 and No. 14 to No. 102 corresponding to Example, the forming temperature Tx was 1,400°C or less. In addition, the elastic modulus E was as high as 80 GPa or more.

Meanwhile, in Sample No. 13 corresponding to Comparative Example, the forming temperature Tx was as high as 1,430°C.

### Example 2

Next, the glass fiber and glass-fiber-containing composite material of the present invention are described.

For example, when a composition for a glass fiber having the glass composition of Sample No. 1 of Example 1 is melted, and then a bushing apparatus having a nozzle made of platinum is used, a glass monofilament having a diameter of 3 µm can be continuously formed. Even when the continuous forming is performed, yarn breakage hardly occurs, and hence a glass fiber having a stable fiber diameter can be obtained.

In addition, the bushing apparatus is designed so that a system capable of monitoring the temperature of molten glass in the bushing apparatus corresponding to the forming temperature Tx at any time through thermocouple measurement may operate, and its monitoring temperature width is ±20°C with respect to a target forming temperature. When the forming temperature reduces, heating is performed so as to redress the reduction, and hence stable production can be performed.

Next, when a silane coupling agent or the like is applied in an appropriate amount to the surface of the glass fiber formed with the above-mentioned bushing apparatus by an immersion method, and is air-dried, a glass fiber having applied thereto the sizing agent is obtained. When a plurality of such glass fibers are bundled and lumped with an organic solvent formed of a polypropylene resin, and the lump is cut into a desired length, an LFTP (also referred to as "pellet formed body") in which the glass fibers are oriented in the same direction can be obtained.

A glass fiber length can be lengthened by using the LFTP thus obtained, and hence a glass-fiber-containing composite material having high strength can be obtained. When, for example, a sheet-shaped product is evaluated for its bending strength and the like, the product has performance equal to or more than that of a conventional product.

As described above, each of the glass fiber and the glass-fiber-containing composite material each using the composition for a glass fiber of the present invention exhibits excellent performance, and is hence applicable to various fields in the industry.

### Industrial Applicability

The glass fiber and the glass-fiber-containing composite material each of which is produced by using the composition for a glass fiber of the present invention can be expected to find use in various applications. For example, in an aircraft-related application, the glass fiber and the composite material may each be used in a base material for an aircraft, an interior material, a vibration-proof material, or the like, and in an on-vehicle-related application, the glass fiber and the composite material may each be used in a damping-reinforcing material, a bumper, an engine under cover, a fender, a roof material, a body, a spoiler, a muffler filter, a dash panel, a radiator, a timing belt, or the like. In addition, in a ship-related application, the glass fiber and the composite material may each be used in a motor boat, a yacht, a fishing boat, or the like, in a construction-civil engineering-building material-related application, the glass fiber and the composite material may each be used in a decorative wall, a luminous ceiling/lighting cover, a front paste cloth, an insect screen, a roll blind, a membrane material for a tent, a backlit signboard, a corrugated plate, flat plate, or folded plate for lighting, a concrete corrosion-preventing or concrete-reinforcing material, an exterior wall-reinforcing material, a coating waterproof material, a smoke-proof hanging wall, a non-combustible transparent partition, a projection screen, a road-reinforcing material, a bathtub, a bath-toilet unit, or the like, and in a leisure- or sports-related application, the glass fiber and the composite material may each be used in a fishing rod, a tennis racket, a golf club, a ski, a helmet, or the like. In addition, in an electronic equipment-related application, the glass fiber and the composite material may each be used in a printed wiring board, an insulating plate, a terminal board, a substrate for an IC, an electronic equipment-housing material, a packaging material for an electronic part, an optical equipment-housing material, a packaging material for an optical part, an insulating support, or the like, in an industrial facility-related application, the glass fiber and the composite material may each be used in a windmill blade, a glass filter bag, a jacketing material for a non-combustible heat-insulating material, a reinforcing material for a resinoid wheel, an aluminum filtration filter, or the like, and in an agriculture-related application, the glass fiber and the composite material may each be used in a plastic greenhouse, an agricultural pole, a silo tank, or the like. In addition, the above-mentioned glass-fiber-containing composite material may also be used as a reinforcing material for a known fiber-reinforced composite material.

## Claims

1. A composition for a glass fiber, comprising, in terms of mass%, 0% to 1% of Li₂O+Na₂O+K₂O, and having SiO₂/Al₂O₃ of from 1 to 4 and MgO/CaO of from 0.2 to 3.9 in terms of mass ratio.

2. The composition for a glass fiber according to claim 1, further comprising, in terms of mass%, 0.01% to less than 3% of TiO₂.

3. The composition for a glass fiber according to claim 1 or 2, further comprising, in terms of mass%, 25% to 70% of SiO₂, 15% to 25% of Al₂O₃, 0.6% to 15% of MgO, 3% to 15% of CaO, and 0% to less than 3% of B₂O₃.

4. A composition for a glass fiber, comprising, in terms of mass%, 50% to 70% of SiO₂, 15% to 25% of Al₂O₃, 1.2% to 15% of MgO, 3% to 15% of CaO, 0.01% to less than 3% of TiO₂, 0% to less than 3% of B₂O₃, and 0% to 1% of Li₂O+Na₂O+K₂O, and having SiO₂/Al₂O₃ of from 2 to 3.2 and MgO/CaO of from 0.4 to 2.5 in terms of mass ratio.

5. The composition for a glass fiber according to any one of claims 1 to 4, wherein the composition for a glass fiber has a forming temperature Tx of 1,400°C or less.

6. The composition for a glass fiber according to any one of claims 1 to 5, wherein the composition for a glass fiber has a temperature difference ΔTxy between a forming temperature Tx and a liquidus temperature Ty of 30°C or more.

7. The composition for a glass fiber according to any one of claims 1 to 6, wherein the composition for a glass fiber has an elastic modulus E of 80 GPa or more.

8. A glass fiber, comprising, in terms of solid content, 95 mass% or more of glass formed of the composition for a glass fiber of any one of claims 1 to 7.

9. A glass-fiber-containing composite material, comprising:
the glass fiber of claim 8; and
an organic medium, concrete, or mortar.
